# EUROPEAN PATENT APPLICATION

(11) **EP 2 119 921 A1**
(43) Date of publication of application: **18.11.2009**
(21) Application number: 06843276.4
(22) Date of filing: 26.12.2006
(51) Int. Cl.: F16B 39/20

(54) **FALLING-OFF PREVENTION TOOL**

(71) Applicant: Khi Co., Kitakyushu-shi, Fukuoka 805-0050 (JP)
(72) Inventor: SOEDA, Masamichi, Kitakyushu-shi Fukuoka 805-0050 (JP)
(74) Representative: Skuhra, Udo
(86) International application number: PCT/JP2006/325892
(87) International publication number: WO 2008/078388

(57) **Abstract**

To provide a fall-off preventing element capable of preventing a nut from loosening. A fall-off preventing element (1) includes a coil spring portion (2) which is formed in a manner of winding a metallic wire at approximately the same diameter and has an inner diameter smaller than the diameter of a groove portion of a bolt, one end (3) of the wire and the other end (4) of the wire are positioned outside in a radial direction of the coil spring portion (2) and in approximately the same direction to each other. Although the end (3) and the other end (4) are positioned outside in the radial direction of the coil spring portion (2), they are positioned within a two-face width of a nut in the case of diametrical increase. An end, which has a length of approximately one-eighth of the circumferential length of the coil spring portion from the end (3) of the wire is bent in the other end (4) direction at an angle α. An end, which has a length of approximately one-fourth of the circumferential length of the coil spring portion from the other end (4) of the wire is positioned outside in the radial direction of the coil spring portion (2) and bent in the end (3) direction approximately parallel with the winding axial line in a hook shape.

## Description

### Field of the Art

The present invention relates to a fall-off preventing element. More particularly, the present invention relates to a fall-off preventing element for preventing a fixed object or nut from falling off from a bolt.

### Background Art

For fixing a structure, methods for fastening by a bolt and nut have been widely used in various fields, for example, from steel-frame buildings, steel towers, and road installations to automobiles and electrical products.

For example, Patent Document 1 discloses a fall-off preventing element 101 shown in Fig. 5(a). In the element 101, a lug portion 102 and a coil spring portion 103 are formed of a wire composed of elastic metal, resin or the like.
Here, the inner diameter of the coil spring portion is made slightly smaller than the outer diameter of a leg portion of a bolt to which the fall-off preventing element is to be attached.

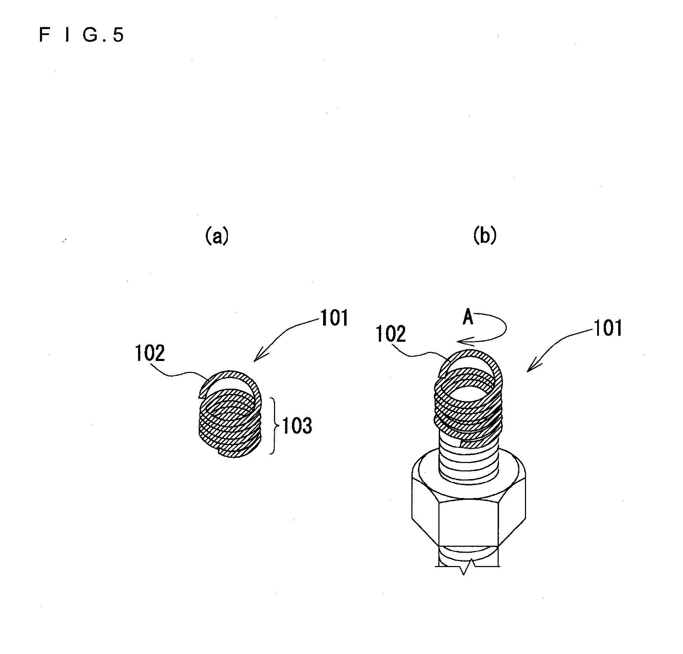

In attaching the fall-off preventing element thus constituted to the leg portion of the bolt, the fall-off preventing element is brought into contact with a tip of the bolt screwed in a nut, and then rotated in a direction indicated by the symbol A in FIG. 5(b).
That is, by rotating the fall-off preventing element with the fall-off preventing element in contact with the tip of the bolt, the coil spring portion is deformed in a direction of increasing the inner diameter of the coil spring portion, the wire of the coil spring portion is fitted from an end of the leg portion and along a thread groove provided on the leg portion of the bolt, and the fall-off preventing element is attached to the leg portion of the bolt.

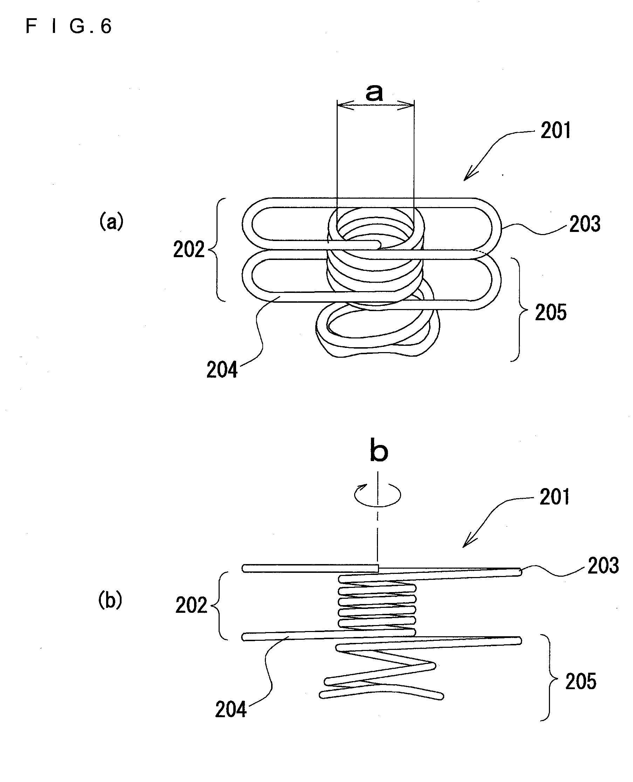

Additionally, Patent Document 2 discloses a fall-off preventing element shown in Fig. 6, a fall-off preventing element 201 includes a first coil spring portion 202, a lug portion for attachment 203, a lug portion for detachment 204 and a second coil spring portion 205.
The first coil spring portion is formed so that the inner diameter thereof indicated by the reference symbol a in Fig. 6 from its base end (upper side in Fig. 6) to its tip is slightly smaller than the outer diameter of the leg portion of the bolt to which the fall-off preventing element is to be attached. Further, the first coil spring portion is, when being rotated clockwise as indicated by the reference symbol b in Fig. 6, wound in a direction of fitting onto the bolt from the leg portion to head portion of the bolt.
The lug portion for attachment is continuously extended from the base end of the first coil spring portion and protruded in a radial direction of the bolt to which the fall-off preventing element is to be attached.
Also, the lug portion for detachment is continuously extended from the tip of the first coil spring portion and protruded in the radial direction of the bolt to which the fall-off preventing element is to be attached.
In addition, the second coil spring portion is continuously extended from a tip of the lug portion for detachment, and wound in the same direction as the winding direction of the first coil spring portion so that the inner diameter of the second coil spring portion is increased from its base end (upper side in Fig. 6) to its tip.

Patent Document 1: Japanese Published Unexamined patent application No. 2001-59514
Patent Document 2: Japanese Published Unexamined patent application No. 2005-83543

### Disclosure of the Invention

### Problem(s) to be Solved by the Invention

However, since a conventional fall-off preventing element includes a lug portion in which a part of a wire crosses a winding axial line of a coil spring portion and is formed in a hook shape, the lug portion becomes an obstruction and the fall-off preventing element cannot be attached to a bolt in the case where a leg portion (excess portion) of the bolt passed through a nut is large. Additionally, large force is required in detachment. Since another conventional fall-off preventing element includes a bar-shaped lug portion which is continuously extended from a tip of the element and protruded in a radial direction, the lug portion becomes an obstruction, an electric tool with a socket cannot be used and a great number of the elements cannot be attached.
Additionally, when vibration is applied, the fall-off preventing element readily receives force from the nut and is slowly pushed by the nut, and the nut begins loosening at a relatively small number of times of vibration.

The present invention has been made in view of the above problems, and it is an object of the present invention to provide a fall-off preventing element capable of preventing a nut from loosening.

### Means for Solving the Problem

In order to achieve the above object, the present invention provides a fall-off preventing element to be attached to a leg portion of a bolt, the element including a coil spring portion which is formed in a manner of winding a wire at approximately the same diameter and has an inner diameter smaller than the diameter of a groove portion of the bolt, wherein the one end and the other end of the wire are positioned outside in a radial direction of the coil spring portion, an end, which has a predetermined length from the one end of the wire is positioned outside in the radial direction of the coil spring portion and bent in the other end direction.

Here, since one end and the other end of the wire are positioned outside in the radial direction of the coil spring portion, a protrusion area is smaller than that in the case, where the wire protrudes and is positioned outside in the radial direction of the coil spring portion, and thus an electric tool and the like are readily used. Additionally, since the end, which has a predetermined length from one end of the wire is positioned outside in the radial direction of the coil spring portion and bent in the other end direction, the wire hardly receives force from a nut in the case of being brought into contact with the nut.
Moreover, "predetermined length" here indicates a length smaller than half of the circumferential length of the coil spring portion.

Additionally, in the fall-off preventing element of the present invention, in the case where the end, which has a predetermined length from one end of the wire is bent at an angle exceeding a lead angle in relation to a center line of the wound wire and at an angle not more than (lead angle + half of a thread angle of the bolt) in relation to the center line of the wound wire, the wire hardly receives the force from the nut and does not ride on the thread of the bolt, and contracting force of the coil spring can be kept.
Moreover, "predetermined length" here indicates a length smaller than half of the circumferential length of the coil spring portion.

Additionally, in the fall-off preventing element of the present invention, in the case where one end and the other end are positioned within a two-face width of the nut in diametrical increase, additional fastening work of the nut and torque inspection of the nut after fastening the nut are readily performed.

Additionally, in the fall-off preventing element of the present invention, in the case where an end, which has a predetermined length from the other end of the wire is positioned outside in the radial direction of the coil spring portion and bent in one end direction approximately parallel with the winding axial line in a hook shape, force is readily applied to the coil spring portion and a hook portion is manually taken and readily rotated even when, for example, the coil spring portion is rotated.
Moreover, "predetermined length" here indicates a length smaller than half of the circumferential length of the coil spring portion.

Additionally, in the fall-off preventing element of the present invention, in the case where the ends, which have predetermined lengths from one end and the other end respectively of the wire are positioned outside in the radial direction of the coil spring portion and have approximately the same shape as each other, the fall-off preventing element itself can be used as a nut.
Moreover, "predetermined length" here indicates a length smaller than half of the circumferential length of the coil spring portion.

### Effect of the Invention

A fall-off preventing element according to the present invention can prevent a nut from loosening.

### Brief Description of the Drawings

Figs. 1(a), (b) and (c) are a schematic perspective view, schematic front view and schematic plan view for explaining a fall-off preventing element according to a first embodiment of the present invention respectively.
Figs. 2(a), (b) and (c) are a schematic perspective view, schematic front view and schematic plan view for explaining a fall-off preventing element according to a second embodiment of the present invention respectively.
Fig. 3 is a schematic view for explaining a bending angle of an end, which has a predetermined length from one end of a wire.
Fig. 4 is a schematic view showing a state where the fall-off preventing element of the present invention is attached to a looseness tester.
Fig. 5 is a schematic view for explaining a conventional fall-off preventing element.
Fig. 6 is a schematic view for explaining another conventional fall-off preventing element.

### Description of the Symbols

- 1: Fall-off preventing element
- 2: Coil spring portion
- 3: One end of wire
- 4: Other end of wire
- 5: Vibration tool
- 6: Bolt attachment tool
- 7: Bolt
- 7A: Thread of bolt
- 8: Nut
- 9: Vibrating pin
- 10: Tool washer
- 11: Impact stroke
- 12: Vibration stroke
- α: Bending angle
- β: Thread angle of bolt

### Best Mode for Carrying Out the Invention

Hereinafter, embodiments of the present invention will be described with reference to the drawings for understanding of the present invention.

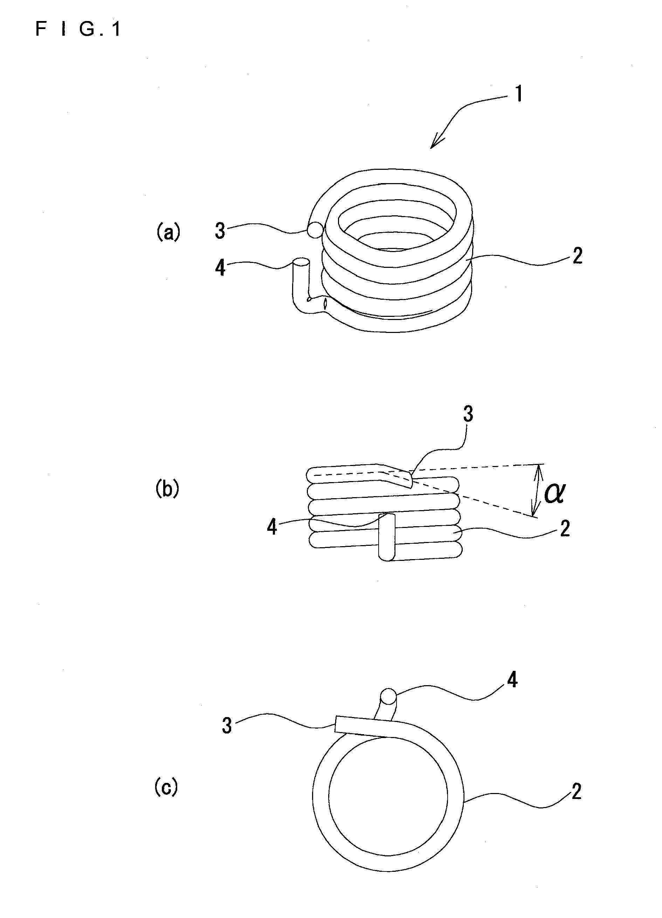

Fig. 1(a), (b) and (c) are a schematic perspective view, schematic front view and schematic plan view for explaining a fall-off preventing element of a first embodiment of the present invention respectively. In Fig. 1, a fall-off preventing element 1 of the present invention includes a coil spring portion 2 which is formed in a manner of winding a metallic wire at approximately the same diameter and has an inner diameter smaller than the diameter of a groove portion of a bolt, and one end 3 and the other end 4 of the wire are positioned outside in a radial direction of the coil spring portion 2 and in approximately the same direction to each other. In addition, a winding angle of the coil spring portion 2 corresponds to a lead angle of a screw portion of a leg portion of the bolt.
The end 3 and the other end 4 are positioned outside in the radial direction of the coil spring portion 2, however, positioned within a two-face width of a nut even in the case of diametrical increase.
In addition, as shown in Fig. 1(b), an end, which has a predetermined length, for example, a length in a range of being positioned outside of the coil spring portion and approximately one-eighth of the circumferential length of the coil spring portion from the end 3 of the wire is bent in the other end 4 direction at an angle α. Also, the winding angle of the coil spring portion 2 corresponds to the lead angle of the screw portion of the leg portion of the bolt.
Also, the end 3 of the wire is positioned outside in a radial direction of a coil spring portion region partially constituted by an end, which has a predetermined length, for example, a length of approximately one-eighth of the circumferential length of the coil spring portion, from the other end 4, of the wire.
As shown in Fig. 1(a), an end, which has a predetermined length, for example, a length of approximately one-fourth of the circumferential length of the coil spring portion, from the other end 4, of the wire is positioned outside in the radial direction of the coil spring portion 2 and bent in the end 3 direction approximately parallel with a winding axial line in a hook shape.

Here, one end and the other end of the wire are positioned outside in the radial direction of the coil spring portion and an end, which has a predetermined length from one end of the wire is positioned outside in the radial direction of the coil spring portion and bent in the other end direction, one end and the other end are not always required to be positioned within the two-face width of a nut in the case of the diametrical increase.
Further, if one end and the other end of the wire are positioned outside in the radial direction of the coil spring portion and the end, which has a predetermined length from one end of the wire is positioned outside in the radial direction of the coil spring portion and bent in the other end direction, an end, which has a predetermined length from the other end of the wire is not always required to be positioned outside in the radial direction of the coil spring portion and bent in one end direction approximately parallel with the winding axial line in the hook shape.
Furthermore, if one end and the other end of the wire are positioned outside in the radial direction of the coil spring portion and the end, which has a predetermined length from one end of the wire is positioned outside in the radial direction of the coil spring portion and bent in the other end direction, the wire is not always required to be made of metal, and may be made of resin or the like.

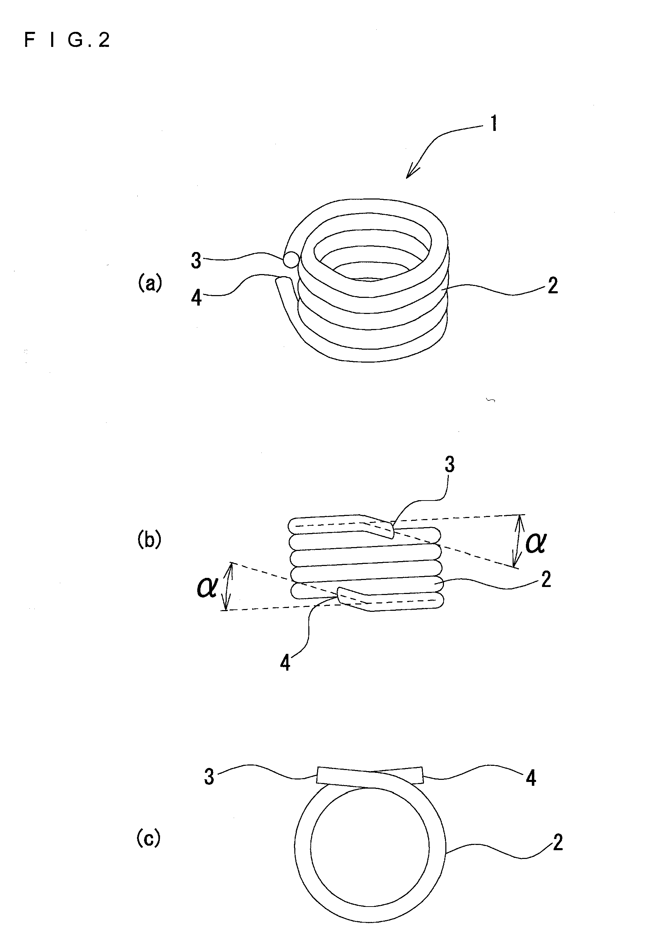

Figs. 2(a), (b) and (c) are a schematic perspective view, schematic front view and schematic plan view for explaining a fall-off preventing element of a second embodiment of the present invention respectively. In Fig. 2, the fall-off preventing element 1 of the present invention includes the coil spring portion 2 formed in the manner of winding the metallic wire at approximately the same diameter, the end 3 and the other end 4 of the wire are positioned outside in the radial direction of the coil spring portion 2 and in approximately the same direction to each other. Also, the winding angle of the coil spring portion 2 corresponds to the lead angle of the screw portion of the leg portion of the bolt.
The end 3 and the other end 4 are positioned outside in the radial direction of the coil spring portion 2, however, positioned within the two-face width of the nut in the case of the diametrical increase.
As shown in Fig. 2(b), the end, which has a predetermined length, for example, the length in the range of being positioned outside of the coil spring portion and approximately one-eighth of the circumferential length of the coil spring portion from the end 3 of the wire is bent in the other end 4 direction at the angle α. Additionally, the end, which has a predetermined length, for example, the length in the range of being positioned outside of the coil spring portion and approximately one-eighth of the circumferential length of the coil spring portion from the other end 4 of the wire is bent in the end 3 direction at the angle α, and the shape of the end, which has the predetermined lengths from the end 3 of the wire is approximately the same as that of the end, which has the predetermined length from the other end 4 of the wire.
As shown in Fig. 2(b), the end 3 of the wire is positioned outside in a radial direction of the coil spring portion region partially constituted by having the end, which has a predetermined length, for example, the length of approximately one-eighth of the circumferential length of the coil spring portion, from the other end 4 of the wire.

If here, one end and the other end of the wire are positioned outside in the radial direction of the coil spring portion and the end, which has a predetermined length from one end of the wire is positioned outside in the radial direction of the coil spring portion and bent in the other end direction, the shapes of the ends, which have predetermined lengths from one end and the other end respectively of the wire are not always required to be approximately the same as each other.

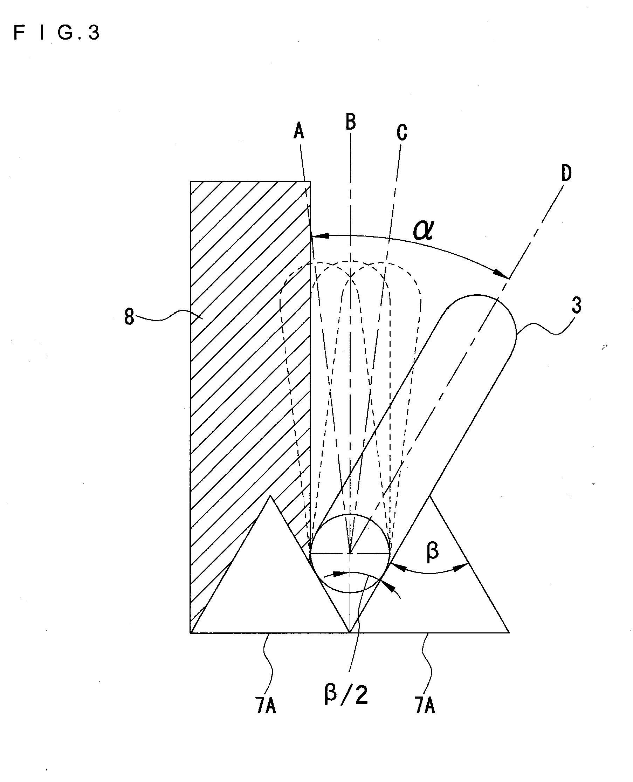

Fig. 3 is a schematic view for describing a bending angle of an end, which has a predetermined length from one end of the wire.
In Fig. 3, one end of the wire is in a state of being not bent at all where a center line of the wire is indicated by the reference symbol A, the end of the wire is in a state of being bent at the lead angle in relation to a center line, the center line A, of the wound wire where the center line of the wire is indicated by the reference symbol B, the end of the wire is in a state of being bent at an angle double the lead angle in relation to the center line, the center line A, of the wound wire where the center line of the wire is indicated by the reference symbol C, and the end of the wire is in a state of being bent at an angle equivalent to (lead angle + half β/2 of an angle β of a thread 7A of the bolt) in relation to the center line, the center line A, of the wound wire where the center line of the wire is indicated by the reference symbol D.

As shown in Fig. 3, the bending angle α of bending the end, which has a predetermined length from one end of the wire in the other end direction indicates the magnitude of the angle that the end is bent in relation to the center line of the wound wire. In the state where the wire is not bent at all, a surface of the wire interferes at an end surface of the nut 8, and looseness preventing force is not effectively exhibited in counterclockwise rotation in a looseness direction of the nut 8. Although such interference can be prevented by bending the end, which has a predetermined length from one end of the wire in the other end direction, the surface of the wire becomes approximately parallel with and has a possibility of coming into contact with the end surface of the nut 8 in the state, where the end is bent at the lead angle in relation to the center line of the wound wire, thereby resulting in insufficiency.
Although it is then preferable the bending angle α of bending the end, which has a predetermined length from one end of the wire in the other end direction exceeds the lead angle in relation to the center line of the wound wire, the end, which has the predetermined length from one end of the wire rides on the thread 7A of the bolt, contracting force of the coil spring is reduced and the looseness preventing force of a nut cannot be effectively exhibited when the angle α is larger than (lead angle + half β/2 of the angle β of the thread 7A of the bolt) in relation to the center line of the wound wire. Therefore, it is preferable the bending angle α is not more than (lead angle + half β/2 of the angle β of the thread 7A of the bolt) in relation to the center line of the wound wire.

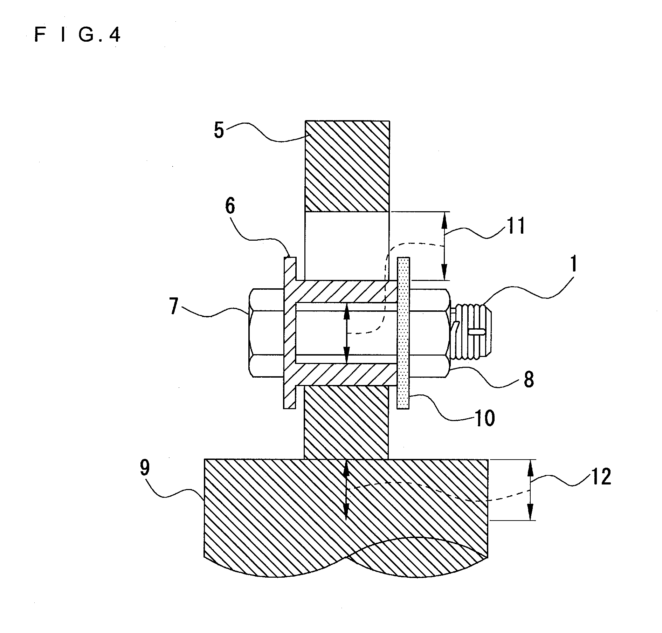

Next, looseness tests will be described which were performed for a conventional fall-off preventing element and the fall-off preventing element of the present invention. Fig. 4 is a schematic view showing a state where the fall-off preventing element of the present invention is attached to a looseness tester.
As shown in Fig. 4, a bolt attachment tool 6 was inserted in an opening formed in a vibration tool 5 of the looseness tester based on NAS (National Aircraft Standard) 3350, a bolt 7 based on Steel Tower Standard was inserted in the bolt attachment tool 6, rape seed oil was applied to a leg portion of the bolt 7, a tool washer 10 was attached to the leg portion of the bolt 7, and the nut 8 based on Steel Tower Standard, to which the rape seed oil was applied, was attached to the leg portion of the bolt 7 at a specified torque from above the tool washer 10. Also, the fall-off preventing element 1 of the present invention to be tested was attached to an excess portion of the bolt 7. Also, the fall-off preventing element 1 of the present invention used in the looseness test corresponded to that shown in Fig. 1. The end, which has a predetermined length, for example, the length in the range of being positioned outside of the coil spring portion and approximately one-eighth of the circumferential length of the coil spring portion from the end 3 of the wire bent in the other side 4 direction at the angle α was directed to the nut 8, and the element 1 was attached to the excess portion of the bolt 7. Moreover, a end, which has a predetermined length from one end of a wire of a fall-off preventing element used as a comparison example was not bent in the other side direction and is directed to the nut 8, and the fall-off preventing element used as a comparison example was attached to the excess portion of the bolt 7.

Two types of bolts, M16 having a bolt screw length of 40mm and M20 having a bolt screw length of 50mm, were used in the looseness test. A nut was fastened to the bolt M16 at a fastening torque of 7400N·cm, and a nut was fastened to the bolt M20 at a fastening torque of 16000N·cm.

In the looseness tester, to which the fall-off preventing element was thus attached, vibration having a vibration stroke of 11mm indicated by the reference symbol 12 was applied by a vibrating piston 9, an impact having an impact stroke 19mm indicated by the reference symbol 11 was brought to the bolt 7 and nut 8.
The vibration frequency was set to 21.3Hz, the vibration acceleration was set to 10G, a vibrating direction was made orthogonal to a bolt axis, and the number of times of vibration in start of looseness of the nut 8 and the number of times of vibration in falling-off of the nut were checked. Moreover, determination of the looseness of the nut was performed based on change of positions of marks pre-attached to the bolt and nut, or on change of vibration impact sound, and the test was finished at vibrations of 30,000 times based on NAS3350 in the case where the nut would not fall off. A result of the test will be indicated in the following table.

**Table 1**

| | | | | | | |
|---|---|---|---|---|---|---|
| Diameter (intensity) | M16 (5.8) | | | M20 (6.8) | | |
| Fastening torque | 7,400N·cm | | | 16,000N·cm | | |
| Lubricating condition | Application of rape seed oil | | | Application of rape seed oil | | |

| Fall-off preventing element | Number | Determination of looseness (Number of times of vibration) | | Number | Determination of looseness (Number of times of vibration) | |
|---|---|---|---|---|---|---|
| | | Looseness start | Determination of fall-off of nut | | Looseness start | Determination of fall-off of nut |
| Embodiment | 1 | 7,593 | 30,000 Not falling off | 1 | 23,145 | 30,000 Not falling off |
| | 2 | 25,340 | 30,000 Not falling off | 2 | 23,570 | 30,000 Not falling off |
| | 3 | 13,870 | 30,000 Not falling off | 3 | 19,576 | 30,000 Not falling off |
| | Average | 14,601 | 30,000 Not falling off | Average | 22,097 | 30,000 Not falling off |
| Comparison example | 1 | 2,447 | 30,000 Not falling off | 1 | 2,840 | 30,000 Not falling off |
| | 2 | 2,076 | 30,000 Not falling off | 2 | 2,784 | 30,000 Not falling off |
| | 3 | 2,672 | 30,000 Not falling off | 3 | 2,890 | 30,000 Not falling off |
| | 4 | 3,230 | 30,000 No t falling off | 4 | 2,945 | 30,000 Not falling off |
| | Average | 2,606 | 30,000 Not falling off | Average | 2,865 | 30,000 Not falling off |

As revealed by Table 1, in both M16 and M20, the nuts, each to which the fall-off preventing element of the present invention was attached, did not fall off although a vibration having a frequency of 21.3Hz (vibration acceleration of 10G) was applied 30,000 times. Although the vibration frequency was then increased in 30Hz (vibration acceleration was increased in 19.5G) and a large impact was further applied 30,000 times, the nuts did not fall off and it was revealed that the fall-off preventing element of the present invention has a sufficient fall-off preventing function for nuts.
Additionally, regarding both M16 and M18, the number of times of vibration in start of looseness of the nut in the case of attaching the fall-off preventing element of the present invention is much larger than that in the case of attaching the conventional fall-off preventing element, and it is revealed that a looseness preventing function for nuts is further improved.

As described above, in the fall-off preventing element of the present invention, since one end and the other end of the wire are positioned outside in the radial direction of the coil spring portion and thus a protrusion area is smaller that in the case where the wire is protruded and positioned outside in the radial direction of the coil spring portion, an electric tool and the like are readily used. Additionally, since the end, which has a predetermined length from one end of the wire is positioned outside in the radial direction of the coil spring portion and bent in the other end direction, the element hardly receives force from the nut in the case of being brought into contact with the nut and can prevent the nut from loosening.
Since an electric tool and the like are readily used, a great number of fall-off preventing elements can be attached and working efficiency is improved.

Since the end, which has a predetermined length from one end of the wire is bent at an angle exceeding the lead angle in relation to the center line of the wound wire and at an angle not more than (lead angle + half of the thread angle of the bolt) in relation to the center line of the wound wire, the wire hardly receives force from the nut and does not ride on the thread of the bolt, the contracting force of the coil spring portion can be kept, and the bending method advantageously acts on prevention of looseness of the nut.
Moreover, when the wire rides on the thread of the bolt, it is pushed outward by the thread, the contracting force of the coil spring is reduced and force for preventing the nut from loosening is not exhibited.

Since one end and the other end of the wire are positioned within the two-face width of the nut in the case of the diametrical increase, additional fastening work of the nut and torque inspection of the nut after fastening the nut are readily performed.

Since the part, which has a predetermined length from the other side, of the wire is positioned outside in the radial direction of the coil spring portion and bent in one side direction approximately parallel with the winding axial line in the hook shape, force is readily applied to the coil spring portion and a hook portion is manually taken and readily rotated with fingers even when for example, the coil spring portion is rotated.

Since the shape of the end, which has a predetermined length from one side of the wire is approximately the same as that of the end, which has a predetermined length from the other end of the wire, the same as each other, the fall-off preventing element itself can be used like a nut.

Since the winding angle of the coil spring portion corresponds to the lead angle of the screw portion of the leg portion of the bolt, friction force can be evenly applied to a thread groove of the coil spring portion, attachment or detachment of the element is made easy, no local plastic deformation is caused in attachment, and the function of the element does not lower even in re-use.

## Claims

1. A fall-off preventing element to be attached to a leg portion of a bolt, the element comprising a coil spring portion which is formed in a manner of winding a wire at approximately the same diameter and has an inner diameter smaller than the diameter of a groove portion of the bolt,
wherein one end and the other end of the wire are positioned outside in a radial direction of the coil spring portion, and
an end, which has a predetermined length from the one end of the wire is positioned outside in the radial direction of the coil spring portion and bent in the other end direction.

2. The fall-off preventing element according to claim 1, wherein the end, which has a predetermined length from the one end of the wire is bent at an angle exceeding a lead angle in relation to a center line of the wound wire and at an angle not more than (lead angle + half of a thread angle of the bolt) in relation to the center line of the wound wire.

3. The fall-off preventing element according to claim 1, wherein the one end and the other end are positioned within a two-face width of a nut in the case of diametrical increase.

4. The fall-off preventing element according to claim 1, wherein an end, which has a predetermined length from the other end, of the wire is positioned outside in the radial direction of the coil spring portion and bent in the one end direction approximately parallel with a winding axial line in a hook shape the same as each other.

5. The fall-off preventing element according to claim 1, wherein the ends, which have predetermined lengths from the one end and the other end respectively of the wire are positioned outside in the radial direction of the coil spring portion and have approximately the same shape.
